# EUROPÄISCHE PATENTSCHRIFT

(11) **EP 1 308 749 B1**
(45) Veröffentlichungstag und Bekanntmachung des Hinweises auf die Patenterteilung: **15.11.2006**
(21) Anmeldenummer: 02102489.8
(22) Anmeldetag: 25.10.2002
(51) Int. Cl.: G01S 13/92

(54) **Signalverarbeitungsverfahren und Vorrichtung**
Signalprocessing method and system
Procédé et système de traitement de signaux

(30) Priorität: 31.10.2001 US 984821
(43) Veröffentlichungstag der Anmeldung: 07.05.2003
(73) Patentinhaber: DEERE & COMPANY, Moline, Illinois 61265-8098 (US)
(72) Erfinder: Mertins, Karl-Heinz Otto, Davenport, IA 52807 (US); Littke, Jerry, Dean, Hillsboro ND 58045 (US); Cooper, William, F., Fargo, ND 58102 (US); Worrel, Rick, Allen, McKinney, TX 75070 (US)
(74) Vertreter: Holst, Sönke

(56) Entgegenhaltungen:
- DE-A- 4 007 249
- DE-C- 4 317 832
- US-A- 4 316 173
- US-A- 4 788 553
- US-A- 5 696 515
- US-A- 5 912 822

## Beschreibung

Die Erfindung betrifft ein Signalverarbeitungsverfahren für ein Fahrzeuggeschwindigkeitssensorsystem mit einem Transceiver, der mit einer Antenne gekoppelt ist, um ein elektromagnetisches Signal auf das Gelände abzustrahlen, über das sich das Fahrzeug bewegt und ein reflektiertes Doppler-Signal davon zu empfangen, wobei der Transceiver im Zeitraum ein gleichphasiges Referenzsignal (I) und ein gegenüber dem Referenzsignal (I) in der Phase um 90 Grad verschobenes Quadratursignal (Q) erzeugt und mit einem digitalen Signalprozessor, der die Signale (I und Q) erhält und eine Vorrichtung zur Durchführung des Verfahrens wobei das Signalverarbeitungsverfahren folgende Schritte umfasst: Durchführen einer schnellen Fouriertransformationsroutine, um die Signale (I und Q) aus dem Zeitraum in Frequenzraumwerte I(f) und Q(f) umzuwandeln und Umsetzen der Frequenzraumwerte I(f) und Q(f) in ein Fahrzeuggeschwindigkeitssignal.

Gebräuchliche Radargeschwindigkeitssensoren für Fahrzeuge, wie sie beispielsweise an landwirtschaftlichen Traktoren verwendet werden, sind gegenüber Vibrationen empfindlich und zeigen daher auch dann eine Fahrzeugbewegung an, wenn das Fahrzeug still steht. Kommerziell erhältliche, an Fahrzeugen angebrachte Doppler-Radar-Geschwindigkeitssensoreinheiten weisen Bewegungen nach und erzeugen ein Geschwindigkeitssignal. Derartige Einheiten können ein ungenaues Geschwindigkeitssignal erzeugen, wenn sie Vibrationen des Fahrzeugs ausgesetzt oder wenn sie im Sichtbereich sich wiegenden Grases, Papiers oder ähnlichem geparkt sind. Software-Filter wurden genutzt, um zu versuchen, festzustellen, ob die nachgewiesene Bewegung auf der aktuellen Fahrzeuggeschwindigkeit beruht oder ein Artefakt ist. Derartige Filter haben die Wirkung, dass die Antwort des Sensors verlangsamt ist. Ein anderes zur Lösung dieses Problems verwendetes Verfahren beruht auf zwei Radareinheiten (zwei Antennen, zwei Detektoren), die derart befestigt sind, dass sie den Boden in unterschiedlichen Richtungen sehen (die so genannte "Janus"-Konfiguration). Ein Signalverarbeitungssystem empfängt die Signale von beiden Radareinheiten und stellt fest, ob sich das Fahrzeug tatsächlich bewegt oder nicht.

Die US 5 912 822 A beschreibt ein Verkehrsüberwachungssystem mit einem in einem Fahrzeug angebrachten Radartransceiver, dessen Empfangssignale auf digitale Weise einer Fourieranalyse und Quadraturdetektion unterzogen werden, um die Geschwindigkeit von Fahrzeugen unter Verwendung des Dopplereffekts zu messen und entgegenkommende Fahrzeuge von in derselben Richtung vorausfahrenden Fahrzeugen unterscheiden zu können. Es wird zwar ein Ignorieren fehlerhafter Messungen erwähnt, jedoch nicht im Detail beschrieben.

Die US 4 316 173 A beschreibt ein auf Radar und dem Dopplereffekt basierendes Geschwindigkeitsmesssystem für ein Fahrzeug. Die empfangenen Signale werden gemischt und verstärkt. Um durch vertikale Bewegungen des Fahrzeugs bedingte Fehler zu vermeiden, werden niederfrequente Komponenten aus den Signalen herausgefiltert. Hier erfolgt keine Identifizierung von Vibrationsfrequenzen, sondern es werden pauschal alle unter einem Grenzwert liegenden Frequenzen aus dem Signal entfernt, auch wenn es sich um korrekte Messwerte handeln sollte. Die Messung ist daher auf relativ hohe Geschwindigkeiten begrenzt.

Die der Erfindung zu Grunde liegende Aufgabe wird darin gesehen, ein Radar-Geschwindigkeits-Sensorsystem bereitzustellen, das trotz Fahrzeugvibrationen genaue Geschwindigkeitsinformationen bereitstellt.

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Es wird ein Radar-Geschwindigkeitssensorsystem vorgeschlagen, das einen Mikrowellen-Transceiver umfasst, der zwei Detektoren umfasst, die derart eingerichtet sind, dass sie ein Paar Dopplerverschobene Signale generieren, die untereinander um 90 Grad phasenverschoben sind. Ein digitaler Signalprozessor (DSP) verarbeitet die empfangenen Doppler-Signale. Der DSP führt eine komplexe, schnelle Fouriertransformationsroutine durch, die es erlaubt, gleichzeitig sowohl die Richtung als auch die Geschwindigkeit des Sensors festzustellen. Die Richtung wird festgestellt, indem überprüft wird, ob die Phase des ersten Doppler-Signals dem anderen Doppler-Signal 90 Grad nachläuft oder 90 Grad vorläuft. Da der DSP eine schnelle Fouriertransformationsroutine (FFT-Routine) durchführt, wird die Geschwindigkeit im Frequenzraum festgestellt, anstelle des Zeitraums. Das Feststellen der Geschwindigkeit im Frequenzraum ergibt ein System, das besser in der Lage ist, Geräusche und vibrationsbedingte Signale von einem aktuellen Doppler-Signal zu unterscheiden. Die komplexe FFT-Routine kann durch Fahrzeugvibrationen bedingte Frequenzen identifizieren, die dann ignoriert oder abgezogen werden. Durch das Feststellen von Vibrationsfrequenzen ist das System in der Lage, eine Anzeige einer Fahrzeugbewegung zu vermeiden, wenn das Fahrzeug stillsteht.

Auf diese Weise erübrigt sich ein langsamer Software-Filter, erhält man sowohl Geschwindigkeits- als auch Richtungsinformationen und benötigt keine zwei Antennen und Detektoren.

Die Vibrationsfrequenzraumwerte können dadurch identifiziert werden, dass ein Vergleich der Amplituden der Vorwärts- und der Rückwärtsfrequenzraumwerte erfolgt. Übersteigt das Verhältnis zwischen der größeren Amplitude und ihrem spiegelbildlichen Wert einem vorbestimmten Wert, kann von einem zu ignorierenden Messwertepaar ausgegangen werden.

In den Zeichnungen ist ein nachfolgend näher beschriebenes Ausführungsbeispiel der Erfindung dargestellt. Es zeigt:
- Fig. 1: ein vereinfachtes schematisches Blockdiagramm eines erfindungsgemäßen Geschwindigkeitssensorsystems,
- Fig. 2 und 2A - 2C: bilden ein logisches Flussdiagramm, das einen Algorithmus illustriert, der von dem digitalen Signalprozessor in Figur 1 ausgeführt wird.

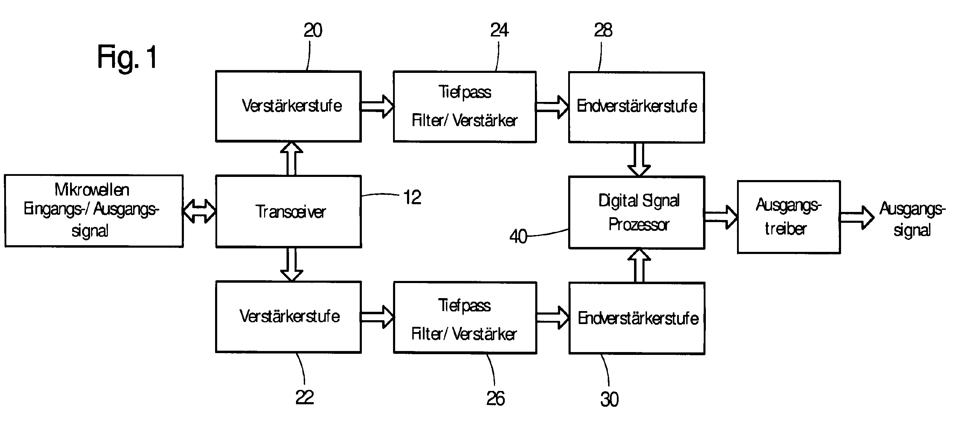

Es wird auf Figur 1 Bezug genommen, gemäß der das Fahrzeuggeschwindigkeitssensorsystem 10 einen Mikrowellen-Transceiver 12 (Sender und Empfänger) umfasst, der mit einer Antenne 13 gekoppelt ist. Die Antenne 13 strahlt vorzugsweise ein kontinuierliches (continuous wave) Mikrowellensignal bei einer gewünschten Frequenz, wie beispielsweise 24,125 GHz auf das Gelände aus, über das das (nicht gezeigte) Fahrzeug fährt, und empfängt davon ein reflektiertes Doppler-Signal. Der Transceiver 12 hat zwei Detektoren (nicht gezeigt), wie Schottky-Dioden. Jeder Detektor funktioniert als Mikrowellenmischer, der zwei Kanäle bildet. Einer der Detektoren wird als Phasenreferenz betrachtet und erzeugt das gleichphasige Referenzsignal I. Der zweite Detektor erzeugt das Quadratur-Signal Q, das vom Referenzsignal I um etwa 90 Grad in der Phase verschoben ist.

Die Doppler-Signale I und Q im Zeitraum werden über entsprechende Verstärkungsstufeneinheiten 20, 22, Tiefpassfilter/Verstärkungsstufeneinheiten 24, 26 und Endverstärker 28, 30 verarbeitet und an einen digitalen Signalprozessor, DSP, 40 übermittelt.

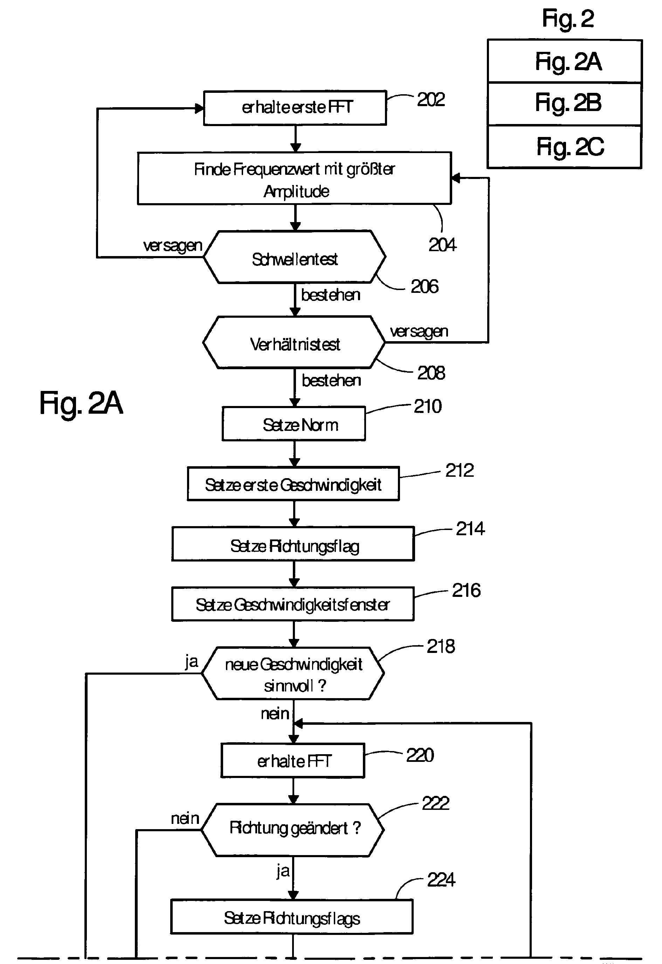

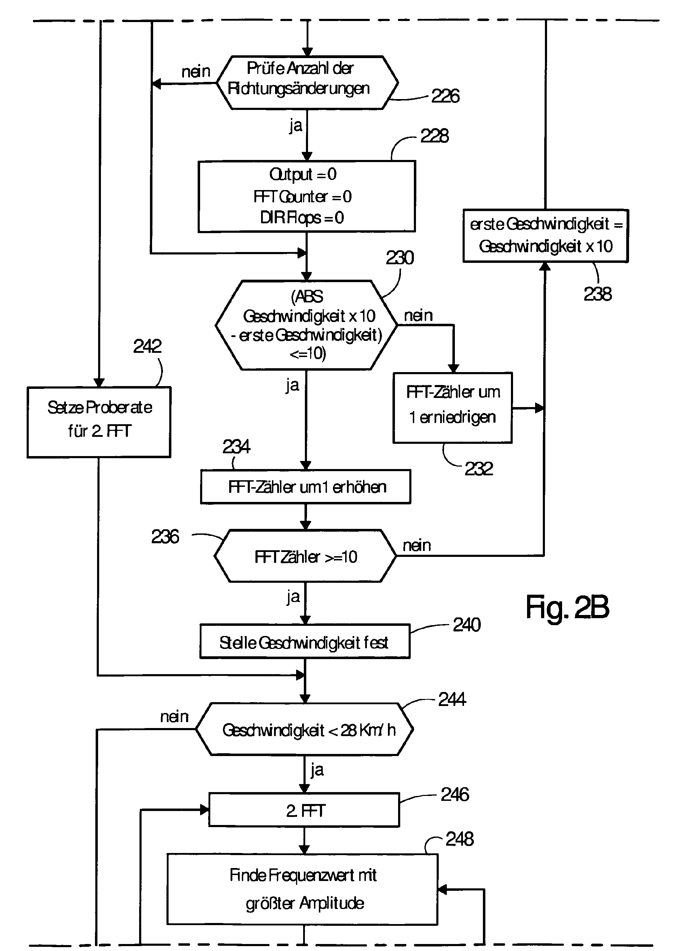

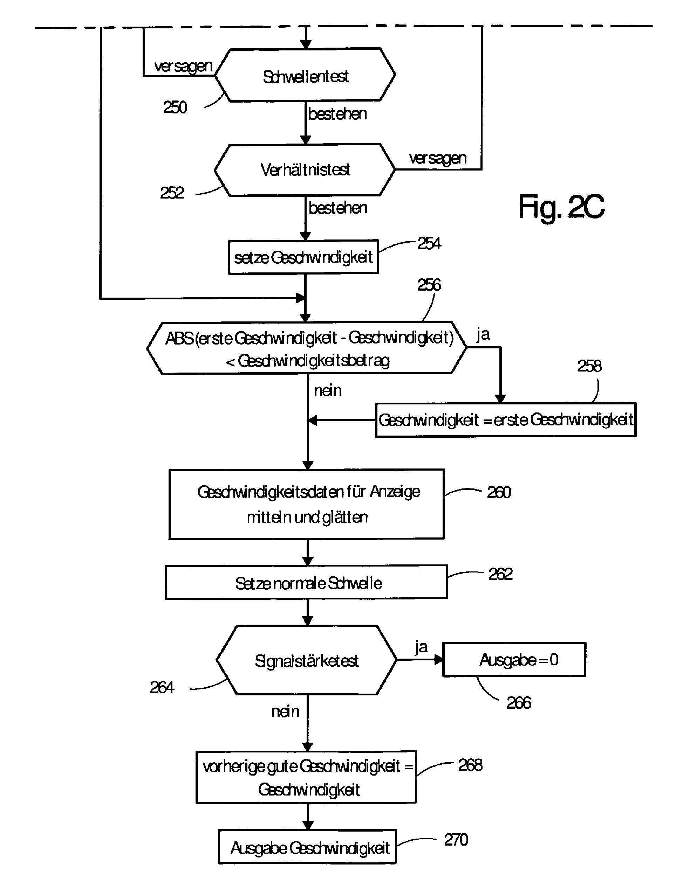

Der DSP 40 führt einen Signalverarbeitungsalgorithmus 200 aus, der durch das in den Figuren 2A - 2C gezeigte Flussdiagramm illustriert wird. Die folgende Beschreibung ist auf die Situation anwendbar, in der das Fahrzeug losfährt oder von der Nullgeschwindigkeit oder Ruhebedingung ausgehend beschleunigt.

Der Schritt 202 ergibt eine Anzahl (z. B. 128) FFT-Proben der Signale I und Q und konvertiert die Signale I und Q aus dem Zeitraum in Werte I(f) und Q(f) im Frequenzraum unter Verwendung einer komplexen, schnellen Fouriertransformationsroutine (FFT), die vorzugsweise ähnlich der FFT-Routine ist, die in dem technischen Dokument von Texas Instruments "Digital Signal Processing Applications for the TMS320 Family; Theory, Algorithms, and Implementations" beschrieben ist. Das Durchlaufen der Quadraturausgaben I und Q durch eine FFT-Routine dekodiert die Geschwindigkeit und die Richtung der Bewegung des Transceivers 12. Die Quadraturausgaben I und Q sind Dopplerverschobene Signale zwischen 0 und etwa 2400 Hz. Ihre Phasenbeziehung zeigt die Bewegungsrichtung des Transceivers 12 an. Die zwei Signale I und Q sind immer 90 Grad phasenverschoben. Wenn das Signal I dem Signal Q vorausläuft, wird die Bewegung in einer Richtung angezeigt, während eine Bewegung in die andere Richtung angezeigt wird, wenn Q I vorausläuft.

Es werden daher 128 Werte im Frequenzraum erhalten und abgespeichert, einschließlich 64 Vorwärtsfrequenzraumwerten und 64 Rückwärtsfrequenzraumwerten, jeder mit einer entsprechenden Amplitudenkomponente, die in 128 Speicherstellen oder "Eimern" in einem Speicher des DSP 40 gespeichert werden. Diese 128 "Eimer" umfassen 0 (bis 63) mögliche erste oder Vorwärts-Frequenzraumwerte, entsprechend jeweiligen Geschwindigkeiten von 0 km/h bis zur maximalen Geschwindigkeit, mit einer niedrigen Auflösung von 1 km/h. Diese 128 "Eimer" umfassen auch (127 bis 63) mögliche zweite oder Rückwärts-Frequenzraumwerte, entsprechend jeweiligen Geschwindigkeiten von 0 km/h bis zur maximalen Geschwindigkeit in der umgekehrten Richtung, ebenfalls mit einer niedrigen Auflösung von etwa 1 km/h. Daher repräsentiert jeder Frequenzraumwert eine Geschwindigkeit, die gleich mit und gegenüber ihrem entsprechenden spiegelbildlichen Frequenzraumwert entgegengesetzt ist.

Der Schritt 204 durchsucht die Rückwärts- und Vorwärts-Frequenzraumwerte nach dem Frequenzraumwert, der die höchste Amplitudenkomponente hat, angefangen von den höchsten bis zu den niedrigsten Frequenz- (oder Geschwindigkeits-) Werten, oder die nächsthöchste Amplitudenkomponente angefangen von den höchsten zu den niedrigsten Frequenzwerten bei nachfolgenden Ausführungen von Schritt 204.

Der Schritt 206 vergleicht die Amplitude des im Schritt 204 gefundenen Frequenzraumwerts mit einer festen Schwelle. Wenn die Amplitude größer als die Schwelle ist, geht der Algorithmus zu Schritt 208 über. Anderenfalls werden diese FFT-Daten nicht genutzt und der Algorithmus geht zu Schritt 202 zurück, um eine andere FFT-Probe zu erhalten.

Der Schritt 208 berechnet das Verhältnis des in Schritt 204 gefundenen Frequenzwerts mit der Amplitude seines Spiegelbilds in der Wertemenge der entgegengesetzten Richtung. Wenn das Verhältnis der beiden Signalamplituden größer als ein fester Wert ist, geht der Algorithmus zu Schritt 210 über. Anderenfalls geht der Algorithmus zum Schritt 204 zurück, um den Frequenzwert zu finden mit der nächsthöheren Amplitudenkomponente. Somit führen die Schritte 204-208 einen Verhältnistest aus, der auf die Amplituden der Frequenzen wirkt, um von Geräuschen oder Fahrzeugvibrationen resultierende Frequenzen von gültigen Doppler-Frequenzen zu unterscheiden. Die Schritte 204-208 identifizieren Frequenzwerte, die beim Verhältnistest als von Fahrzeugvibrationen bedingte Frequenzen versagen, und bewirkt, dass diese Frequenzwerte ignoriert oder abgezogen und nicht in der Erzeugung einer Ausgangsgeschwindigkeit verwendet werden.

Basierend auf den Amplitudenkomponenten der Frequenzraumwerte setzt der Schritt 210 einen Signalstärkenparameter, NORM, der eine zur Signalstärke in Dezibeln umgekehrt proportionale Zahl ist.

Der Schritt 212 setzt einen ersten Geschwindigkeits-Wert, der auf dem Frequenzraumwert mit der größten Amplitude basiert, der den in den Schritten 206 - 208 implementierten Test besteht.

Der Schritt 214 setzt einen Richtungsflag, der gleich "Vorwärts" oder "Rückwärts" ist und auf der Richtung basiert, die für den ersten Geschwindigkeits-Wert gefunden wurde, die davon abhängt, ob der Frequenzraumwert mit der größten Amplitude ein Vorwärts- oder ein Rückwärts-Frequenzraumwert war.

Der Schritt 216 stellt fest, was eine sinnvolle Geschwindigkeitsänderung wäre. Das heißt, dass Schritt 216 basierend auf der gegenwärtigen Geschwindigkeit einen erwarteten Bereich einer neuen Geschwindigkeit bestimmt.

Der Schritt 218 vergleicht die neue oder gegenwärtige Geschwindigkeit mit der vorherigen Geschwindigkeit und stellt fest, ob die neue Geschwindigkeit sinnvoll ist, basierend auf dem, was im Schritt 208 bestimmt wurde. Wenn ja, geht der Algorithmus zu Schritt 242 über. Wenn nicht, geht der Algorithmus zu Schritt 220 über.

Die Schritte 220 - 240 wirken, wenn die neue Geschwindigkeit nicht gegenüber der gegenwärtigen Geschwindigkeit sinnvoll ist und arbeiten, um Ausnahmefälle, wie Grasbewegungen im Wind, herauszufiltern.

Schritt 220 ist eine Wiederholung von Schritt 202.

Schritt 222 überprüft, ob sich die Richtung geändert hat. Wenn sie es hat, geht der Algorithmus zu Schritt 224 über, anderenfalls zu Schritt 230.

Schritt 224 speichert ein gegenwärtiges Richtungsflag ab.

Schritt 226 prüft, ob sich der Richtungsflag mehr als eine festgelegte Anzahl an Malen geändert hat. Wenn es sich nicht um diese Anzahl an Malen geändert hat, geht der Algorithmus zu Schritt 230 über, sonst zu Schritt 228.

Der Schritt 228 setzt einige Zähler zurück und berichtet eine Ausgangsgeschwindigkeit von Null.

Die Schritte 230 - 238 arbeiten, um die Sammlung von Daten zu wiederholen, bis eine festgelegte Anzahl guter Ablesungen berechnet wurde. Wenn diese Anzahl erreicht ist, wird ein Geschwindigkeitswert auf den berechneten Wert gesetzt und der Algorithmus geht zu Schritt 244 über.

Der Schritt 242 determiniert einen hochgenauen oder hochaufgelösten Geschwindigkeitswert. Die Genauigkeit ist eine Funktion der Geschwindigkeit, und je langsamer die Geschwindigkeit, desto höher ist die Genauigkeit. Die erste in den Schritten 204-212 durchgeführte Geschwindigkeitsfeststellung ist eine Feststellung mit niedriger Genauigkeit (Auflösung).

Wenn im Schritt 244 die erste festgestellte Geschwindigkeit höher als 28 km/h war, hat sie bereits die höchstmögliche Auflösung, und der Algorithmus geht zu Schritt 256 weiter.

Schritt 246 erhält und speichert 128 Sensorwerte und konvertiert sie von Zeitraumsignalen in Vorwärts- und Rückwärts-Frequenzraumwerte mit entsprechenden Amplituden, ähnlich mit Schritt 202, aber mit einer höheren Auflösung, die eine Funktion der in Schritt 242 festgelegten Probennahmerate ist.

Schritt 248 durchsucht die Vorwärts- und Rückwärts-Frequenzraumwerte nach dem Wert mit der höchsten Amplitudenkomponente, angefangen von den höchsten zu den niedrigsten Frequenz- (oder Geschwindigkeits-) Werten, oder bei nachfolgenden Ausführungen, der nächsthöchsten Amplitudenkomponente, angefangen von den höchsten zu den niedrigsten Frequenz- (oder Geschwindigkeits-) Werten.

Schritt 250 vergleicht die Amplitudenkomponente des im Schritt 248 gefundenen Frequenzwerts mit einer festen Schwelle. Wenn die Amplitude größer als die Schwelle ist, geht der Algorithmus zu Schritt 252 über. Anderenfalls werden diese FFT-Daten nicht genutzt und der Algorithmus kehrt zu Schritt 246 zurück, um eine andere FFT-Probe zu erhalten und abzuspeichern.

Der Schritt 252 berechnet das Verhältnis der Amplitudenkomponente des in Schritt 248 gefundenen Frequenzwerts mit der Amplitude seines Spiegelbilds in der Menge der Frequenzwerte umgekehrter Richtung. Wenn das Verhältnis der beiden Amplituden größer als ein fester Wert ist, geht der Algorithmus zu Schritt 254 über. Anderenfalls kehrt der Algorithmus zu Schritt 248 zurück, um den Frequenzwert mit der nächsthöheren Amplitude zu finden. Somit führen die Schritte 248-252 ebenfalls, wie die Schritte 204-208, einen Verhältnistest der Amplituden der Frequenzwerte durch, der dahingehend wirkt, Frequenzen, die von Geräuschen oder Fahrzeugvibrationen resultieren, von gültigen Doppler-Frequenzen zu unterscheiden. Die Schritte 248-252 identifizieren Frequenzen, die beim Verhältnistest als durch Fahrzeugvibrationen bedingte Frequenzen versagen und bewirkt, dass diese Frequenzen ignoriert oder abgezogen werden.

Der Schritt 254 setzt einen Geschwindigkeitswert entsprechend des gespeicherten Vorwärts- oder Rückwärtsfrequenzwerts fest, der die höchste entsprechende Amplitude hat und die Schwellen- und Verhältnisbedingungen in Schritten 250 und 252 erfüllt.

Die Schritte 256 - 258 arbeiten derart, dass, wenn eine Differenz in den gegenwärtigen und den vorherigen Geschwindigkeitswerten größer als ein fester Betrag ist, der Geschwindigkeitswert gleich dem vorherigen Geschwindigkeitswert gesetzt wird, der durch eine vorherige Ausführung des Schritts 254 festgestellt wurde.

Schritt 260 unterzieht die Geschwindigkeitswerte Durchschnittsbildungs-/Datenglättungsfunktionen, um sie zur Anzeige auf einem Benutzerdisplay (nicht gezeigt) anzupassen.

Der Schritt 262 setzt eine adaptive Schwelle "Norm-thr". Der Wert für die normale Schwelle wird auf einen niedrigen Wert gesetzt werden, wenn die vorherige gute Geschwindigkeit Null ist (was darauf hinweist, dass das Fahrzeug angehalten wurde) und auf einen davon unterschiedlichen, höheren Wert gesetzt, wenn der vorherige gute Geschwindigkeitswert größer als Null ist (was darauf hinweist, dass sich das Fahrzeug bewegt).

Der Schritt 264 verwendet den NORM-Wert aus Schritt 218 und den normalen Schwellenwert aus Schritt 262 und führt einen Signalstärkentest durch, so dass die Schritte 262 und 264 zusammenwirken, um zu verhindern, dass Maschinenvibrationen falsche Geschwindigkeitswerte bedingen, wenn das Fahrzeug angehalten ist. Wenn die Signalstärke zu weich ist, ist der Test nicht bestanden und Schritt 266 gibt einen Fahrzeuggeschwindigkeitswert von Null aus. Wenn die Signalstärke stark genug ist, aktualisiert der Schritt 268 den vorherigen Geschwindigkeitswert auf den durchschnittlichen Geschwindigkeitswert, wie er in Schritt 260 bestimmt wurde, und Schritt 270 gibt den gegenwärtigen Geschwindigkeitswert aus. Dieser Geschwindigkeitswert kann ein Nullgeschwindigkeitswert sein, oder es wird ein Geschwindigkeits- und Richtungswert sein, der dem gespeicherten Vorwärts- oder Rückwärtsfrequenzwert entspricht, der die größte Amplitude hat und die anderen in diesem Algorithmus 200 implementierten Bedingungen erfüllt.

Im Ergebnis stellt dieses System sowohl die Richtung als auch die Geschwindigkeit des Sensors oder des Fahrzeugs, an dem es befestigt ist, fest. Die Richtung wird abhängig davon festgestellt, ob die Phase am ersten Doppler-Signal dem anderen Doppler-Signal 90 Grad nachläuft oder 90 Grad vorläuft. Führt der DSP 40 die FFT-Routine aus, wird die Geschwindigkeit im Frequenzraum bestimmt, anstelle im Zeitraum. Die Feststellung der Geschwindigkeit im Frequenzraum hat ein System zur Folge, das besser in der Lage ist, Geräusche von einem aktuellen Doppler-Signal zu unterscheiden. Die komplexe FFT-Routine kann, im Wesentlichen als Ergebnis der Schritte 204-208 und 248-252, durch Fahrzeugvibration bedingte Frequenzen als die Frequenzen identifizieren, die im darin enthaltenen Amplitudenverhältnistest versagen, welche Frequenzen dann ignoriert oder abgezogen werden können. Dieses Vermögen, vibrations-induzierte Frequenzen zu ignorieren, ist eine Verbesserung gegenüber gegenwärtigen landwirtschaftlich genutzten Radarsensoren, die gegenüber Vibrationen empfindlich sind und daher auch dann Fahrzeugbewegungen anzeigen können, sogar wenn das Fahrzeug still steht.

Die Umsetzung dieses Flussdiagramms in eine Standardsprache zur Implementierung des durch das Flussdiagramm beschriebenen Algorithmus auf einem Digitalcomputer oder Mikroprozessor ist für den Fachmann offensichtlich.

## Patentansprüche

1. Signalverarbeitungsverfahren für ein Fahrzeuggeschwindigkeitssensorsystem mit einem Transceiver (12), der mit einer Antenne (13) gekoppelt ist, um ein elektromagnetisches Signal auf das Gelände abzustrahlen, über das sich das Fahrzeug bewegt und ein reflektiertes Doppler-Signal davon zu empfangen, wobei der Transceiver (12) im Zeitraum ein gleichphasiges Referenzsignal (I) und ein gegenüber dem Referenzsignal (I) in der Phase um 90 Grad verschobenes Quadratursignal (Q) erzeugt und mit einem digitalen Signalprozessor (40), der die Signale (I und Q) erhält, wobei das Signalverarbeitungsverfahren folgende Schritte umfasst: Durchführen einer schnellen Fouriertransformationsroutine, um die Signale (I und Q) aus dem Zeitraum in Frequenzraumwerte I(f) und Q(f) umzuwandeln und Umsetzen der Frequenzraumwerte I(f) und Q(f) in ein Fahrzeuggeschwindigkeitssignal, **dadurch gekennzeichnet, dass** Vibrationsfrequenzraumwerte identifiziert werden, die Folge von Fahrzeugvibrationen sind, und dass verhindert wird, dass derartige Vibrationsfrequenzraumwerte die Umsetzung der Frequenzraumwerte I(f) und Q(f) in das Fahrzeuggeschwindigkeitssignal beeinflussen.

2. Signalverarbeitungsverfahren nach Anspruch 1, **dadurch gekennzeichnet, dass** es folgende Schritte umfasst: Erhalten und Abspeichern von Vorwärts- und Rückwärtsfrequenzraumwerten mit entsprechenden Amplitudenwerten, wobei jeder Rückwärtsfrequenzraumwert einen entsprechenden spiegelbildlichen Vorwärtsfrequenzraumwert hat, Berechnen des Verhältnisses einer Amplitude eines Frequenzraumwerts zu einer Amplitude eines entsprechenden spiegelbildlichen Frequenzraumwerts, und wenn dieses Verhältnis kleiner als eine Schwelle ist, Verhindern, dass ein derartiger Frequenzraumwert in den Fahrzeuggeschwindigkeitswert umgesetzt wird.

3. Signalverarbeitungsverfahren nach Anspruch 2, **dadurch gekennzeichnet, dass** jeder Rückwärts-Frequenzraumwert einen Geschwindigkeitswert repräsentiert, der gleich und umgekehrt zu seinem entsprechenden Vorwärts-Frequenzraumwert ist.

4. Vorrichtung mit Mitteln zur Identifizierung von Vibrationsfrequenzraumwerten, die Folge von Fahrzeugvibrationen sind, wobei, derartige Vibrationsfrequenzraumwerte die Umsetzung der Frequenzraumwerte I(f) und Q(f) in das Fahrzeuggeschwindigkeitssignal beeinflussen.

## Claims

1. Signal processing method for a vehicle speed sensing system having a transceiver (12) coupled to an antenna (13) for transmitting an electromagnetic signal towards the terrain over which the vehicle is moving and for receiving a reflected Doppler signal therefrom, the transceiver (12) generating a time-domain in-phase reference signal (I) and a quadrature signal (Q) which is offset in phase by 90 degrees from the reference signal (I), and a digital signal processor (40) which receives the signals (I and Q), the signal processing method comprising the following steps:
- executing a fast Fourier transformation routine to convert the time-domain signals (I and Q) into frequency-domain values I(f) and Q(f), and
- converting the frequency-domain values I(f) and Q(f) into a vehicle speed signal,
**characterised in that** vibration frequency-domain values are identified which result from vehicle vibrations, and **in that** such vibration frequency-domain values are prevented from influencing the conversion of the frequency-domain values I(f) and Q(f) into the vehicle speed signal.

2. Signal processing method according to claim 1, **characterised in that** it comprises the following steps:
- obtaining and storing forward and reverse frequency-domain values with corresponding amplitude values, each reverse frequency-domain value having a corresponding mirror-image forward frequency-domain value,
- calculating the ratio of an amplitude of a frequency-domain value to an amplitude of a corresponding mirror-image frequency-domain value, and, if this ratio is smaller than a threshold,
- preventing such a frequency-domain value from being converted into the vehicle speed value.

3. Signal processing method according to claim 2, **characterised in that** each reverse frequency-domain value represents a speed which is equal to and opposite from its corresponding forward frequency-domain value.

4. Device having means for identifying vibration frequency-domain values which result from vehicle vibrations, such vibration frequency-domain values influencing the conversion of the frequency-domain values I(f) and Q(f) into the vehicle speed signal.

## Revendications

1. Procédé de traitement de signal pour un système de capteur de vitesse de véhicule avec un récepteur-émetteur (12), qui est couplé à une antenne (13), afin d'envoyer un signal électromagnétique sur le terrain, par lequel le véhicule se déplace et afin de recevoir un signal Doppler réfléchi de ce véhicule, le récepteur-émetteur (12) générant au cours de la période un signal de référence (I) de même phase et un signal de quadrature (Q) décalé de 90 degrés par rapport au signal de référence (I) et avec un processeur de signal (40) numérique, qui reçoit les signaux (I et Q), le procédé de traitement de signal comprenant les étapes suivantes : mise en oeuvre d'une routine rapide de transformation de Fourier, afin de convertir les signaux (I et Q) provenant de la période en valeurs d'espace de fréquence I(f) et Q(f) et conversion des valeurs d'espace de fréquence I(f) et Q(f) en un signal de vitesse de véhicule, **caractérisé en ce que** des valeurs d'espace de fréquence de vibration sont identifiées, qui sont la conséquence de vibrations de véhicule, et **en ce qu'**on empêche que de telles valeurs d'espace de fréquence de vibration influencent la conversion des valeurs d'espace de fréquence I(f) et Q(f) dans le signal de vitesse de véhicule.

2. Procédé de traitement de signal selon la revendication 1, **caractérisé en ce qu'**il comprend les étapes suivantes : réception et stockage de valeurs d'espace de fréquence avant et arrière avec des valeurs d'amplitude correspondantes, chaque valeur d'espace de fréquence arrière ayant une valeur d'espace de fréquence avant réfléchie et appropriée, calcul du rapport entre une amplitude d'une valeur d'espace de fréquence et une amplitude d'une valeur d'espace de fréquence réfléchie et appropriée, et lorsque ce rapport est inférieur à un seuil, empêcher qu'une telle valeur d'espace de fréquence soit convertie dans la valeur de vitesse du véhicule.

3. Procédé de traitement de signal selon la revendication 2, **caractérisé en ce que** chaque valeur d'espace de fréquence arrière représente une valeur de vitesse qui est égale et inversée par rapport à sa valeur d'espace de fréquence avant correspondante.

4. Dispositif avec des moyens pour l'identification des valeurs d'espace de fréquence de vibration, qui sont la conséquence de vibrations de véhicule, de telles valeurs d'espace de fréquence de vibration influençant la conversion des valeurs d'espace de fréquence I(f) et Q(f) dans le signal de vitesse de véhicule.
